Europäisches Patentamt

European Patent Office

Office européen des brevets

(19)

(11) Veröffentlichungsnummer: **0 370 192**

**A1**

(12) # EUROPÄISCHE PATENTANMELDUNG

(21) Anmeldenummer: **89117205.8**

(51) Int. Cl.5: **B65D 83/08**

(22) Anmeldetag: **18.09.89**

(30) Priorität: **19.11.88 DE 3839180**
     **12.04.89 DE 3911972**

(43) Veröffentlichungstag der Anmeldung:
     **30.05.90 Patentblatt  90/22**

(84) Benannte Vertragsstaaten:
     **AT BE CH DE ES FR GB GR IT LI LU NL SE**

(71) Anmelder: **Klöckner Pentapack**
     **Zweigniederlassung der Klöckner Pentaplast**
     **GmbH**
     **Bahnhofstrasse 25**
     **D-6479 Ranstadt 1(DE)**

(72) Erfinder: **Mildner, Eberhard**
     **Höhenweg 12**
     **D-6479 Ranstadt(DE)**
     Erfinder: **Zubert, Wolfgang**
     **Ringstrasse 38**
     **D-6475 Glauburg(DE)**

(74) Vertreter: **Vomberg, Friedhelm, Dipl.-Phys.**
     **KLÖCKNER-WERKE AG Patentabteilung**
     **Klöcknerstrasse 29**
     **D-4100 Duisburg 1(DE)**

(54) **Faltschachtel aus Karton zur Aufnahme von übereinandergestapelten Hygienetüchern.**

(57) Bei einer Faltschachtel aus Karton, die im wesentlichen quaderförmig ist und deren flache Oberseite eine vorbereitete, gegebenenfalls entlang einer geschlossenen Trennlinie (25) (Perforation) abtrennbaren Fläche (18) zur Freigabe einer Entnahmeöffnung (11) aufweist, wird vorgeschlagen, einen dampf- und flüssigkeitsundurchlässigen einen Hohlraum zur Aufnahme von Hygienetüchern begrenzenden Innenkörper vorzusehen, der eine sich mit der beschriebenen Entnahmeöffnung überlappende Öffnung aufweist. Mindestens eine dieser Öffnungen ist durch eine zungenförmige Lasche wiederverschließbar. Als Innenkörper kann entweder eine Polyäthylen-Schicht der Faltschachtel (10) oder ein Innenbeutel (26) dienen, der jedoch zumindest im Bereich der Entnahmeöffnung (11) mit der Faltschachtelinnenseite befestigt sein muß.

Fig.3

## Faltschachtel aus Karton zur Aufnahme von übereinandergestapelten Hygienetüchern

Die Erfindung betrifft eine Faltschachtel aus Karton, die im wesentlichen quaderförmig ist und deren flache Oberseite eine vorbereitete, gegebenenfalls entlang einer geschlosssenen Trennlinie abtrennbare Fläche zur Freigabe einer Entnahmeöffnung aufweist, zur Aufnahme und Abgabe von darin übereinandergestapelten Hygienetüchern.

Faltschachteln dieser Art sind nach dem Stand der Technik derart ausgeführt, daß sie eine Perforation in geschlossener länglicher ovaler Linie aufweisen, nach deren Durchtrennen eine an der Schachtelinnenseite befestigte - meist geklebte - Kunststoffolie mit einem Spalt frei gelegt wird, durch den jeweils die übereinandergestapelten Hygienetücher entnommen werden können.

Des weiteren ist zum Beispiel aus der EP O 126 362 B ein Ausgabebehälter für Hygienetücher bekannt, der im wesentlichen aus einem parallelepipedförmigen Gehäuse besteht, dessen Oberseiten einen Schlitz aufweist, wobei der Boden im Bereich unterhalb dieses Schlitzes eine in den Behälterinnenraum ragende Ausstülpung besitzt, die derart flexibel ausgestaltet ist, daß durch von außen aufgebrachten Druck die Hygienetücher in Richtung des Schlitzes bewegt werden können.

Des weiteren ist aus der EP O 157 628 B ein Blattspender aus einer Faltschachtel bekannt, dessen Oberseite (Deckel) zwei Klappen mit einander entgegengesetzten, aneinanderliegenden, wellenförmigen freien Rändern aufweist, die einen Schlitz bilden und zwischen denen das Blattmaterial entnommen werden kann, wobei die Ränder derart an den Blättern angreifen, daß ein Blatt zwischen den genannten Rändern gehalten wird.

Die geschilderten Faltschachteln besitzen jedoch allesamt den Nachteil, daß sie nur für trockene Tücher geeignet sind. Darüber hinaus ist nach Öffnen des Garantieverschlusses keine Wiederverschlußmöglichkeit gegeben.

Um mit Flüssigkeit getränkte Vliesstoffe, sogenannte Feuchttücher vor dem Austrocknen zu schützen, verwendet man daher Hartplastikbehälter mit einem Klappdeckel und einem aus einer Metallfolie bestehenden Garantieverschluß (Originalverschluß), die an den oberen Kanten des Behälters angesiegelt bzw. aufgesiegelt ist. Diese Hartplastikbehälter sind jedoch in der Herstellung sehr aufwendig und daher teuer, im übrigen ist deren Entsorgung schwieriger als die von Kartonage.

Aus der DE-A 28 OO 165 ist eine wiederverschließbare Verpackung für feuchte Tücher oder dergl. aus Plastikfolie bekannt, in deren im wesentlichen flachen Oberseite eine Aufreißlinie bzw. ein Stanzschnitt eingestanzt ist, die bzw. der überdeckt ist von einem Umriß größeren, auf dem Material der Oberseite haftenden Verschlußklappe. Diese Verpackung ist aus einer Plastikfolie geschweißt und somit dampfdicht, zur Wiederverschließbarkeit dient die mit einem Haftkleber beschichtete Verschlußklappe. Damit der Haftkleber nicht an dem jeweils oberen Tuch anhaftet, ist der zur Bildung der Entnahmeöffnung aus der Oberseite der Verpackung ausgestanzte Materialstreifen nicht entfernt; beim Hochziehen der Verschlußklappe bleibt dieser Materialstreifen somit an diesem haften. Beim erneuten Verschließen deckt der ausgestanzte Materialstreifen die Öffnung wiederum ab. Die Abdeckung bewirkt eine gewisse Dichtigkeit. Nachteiligerweise ist die Handhabbarkeit der Plastikverpackungen jedoch sehr schlecht, insbesondere sind die Packungen schlecht stapelbar, Verschiebungen der besonders gefalteten Schließtücher gegeneinander, die sich bei der späteren Entnahme hinderlich auswirken, sind praktisch nicht zu vermeiden.

Es ist daher Aufgabe der vorliegenden Erfindung, eine preisgünstige Faltschachtel anzugeben, welche die Aufnahme von feuchten Tüchern ermöglicht, ohne daß diese nach einmaligem Öffnen austrocknen, d.h. die Packung soll dampfdicht wiederverschließbar sein, ferner soll sie leicht handhabbar einen Zugriff zu den Hygienetüchern ermöglichen.

Die Aufgabe wird durch die im Anspruch 1 aufgeführten Merkmale gelöst.

Tragender Gedanke dieser Lösung ist der dampf- und flüssigkeitsundurchlässige Innenkörper, der eine sich mit der Entnahmeöffnung überlappende Öffnung aufweist. Mindestens eine dieser Öffnungen ist durch eine Lasche derart abdeckbar, daß sich die Lasche klebend an die Oberfläche der Faltschachtel oder des Innenkörpers selbstklebend anlegt. Damit die Lasche im Hinblick auf die Entnahmeöffnung immer gleichbleibend abdeckend positioniert bleibt, ist deren Ende auf der Faltschachteloberseite oder auf der Innenkörperoberseite mittels Siegelung fest angeordnet. Gegenüber den Plastikbehältern ergibt sich der Vorteil der kostengünstigeren Herstellbarkeit; die Verpackung ist weniger kritisch bei der Entsorgung als eine reine Plastikverpackung. Gegenüber den bisher im übrigen aus Plastikfolie zusammengeschweißten wiederverschließbaren Verpackungen ist die Handhabbarkeit und Lagerung der innenliegenden Hygienetücher bzw. deren Schutz vor Außeneinwirkungen wesentlich.

Grundsätzlich bieten sich nach einer Weiterbildung der Erfindung zwei alternative Lösungen an: Nach der ersten Lösung ist die Faltschachtel innen mit einer Kunststoff- oder Aluminiumgeschichtung versehen, vorzugsweise schließt die Faltschachtelinnenfläche mit Polyäthylen ab. Eine besondere hohe Stabilität und Flüssigkeitsdichtigkeit erhält die Faltschachtel, wenn sie aus einem Aluminium-Mehrschichtverbund gefertigt wird, der vorzugsweise eine Schichtfolge Polyäthylen, Karton, Polyäthylen, Aluminium, Haftvermittler und Polyäthylen von außen nach innen besitzt.

Die vorgestellte Faltschachtel besitzt eine einzige Entnahmeöffnung, die von einer Lasche im Sinne eines Klebestreifens überdeckt ist. Oberhalb der Entnahmeöffnung ist die Lasche selbstverständlich nicht klebend ausgebildet, vorzugweise wird sie mit einer Folie aus Polyäthylen oder Aluminium abgedeckt, so daß bei wiederverschlossener Faltschachtel eine hohe Dampfdichtigkeit gegeben ist. Ein Verkleben der Hygienetücher mit dem Klebeband wird wirkungsvoll vermieden.

Alternativ zu der vorbeschriebenen Lösung kann jedoch statt der Flüssigkeitsdichten Faltschachtelinnenbeschichtung ein Innenbeutel mit einer Öffnung verwendet werden, wobei der Innenbeutel im Bereich um die Entnahmeöffnung der Faltschachtel herum mit der Schachtelinnenfläche verbunden ist, so daß sich die Öffnung des Innenbeutels und die Entnahmeöffnung überlappen. Zum Verschließen dieser Faltschachtel gibt es somit mehrere Möglichkeiten: Zunächst ist es möglich, die Faltschachtel mit einer in sich geschlossenen Perforationslinie zu versehen, welche die spätere Entnahmeöffnung umgrenzt. Die Verschlußlasche kann entweder auf dem Innenbeutel derart angeordnet sein, daß sie vollständig durch die Entnahmeöffnung von außen zugänglich ist, es ist ebenso möglich, nur eine Verschlußlasche zu verwenden, die zum Beispiel in Form eines Klebestreifens, dessen Umriß die Perforationslinie überlappt, zu verwenden. Dieser Klebestreifen hat, wie bei im Prinzip nach dem Stand der Technik bekannten Laschen üblich, eine nichtklebende Griffzunge; wenn man an dieser Griffzunge zieht und die Lasche ablöst, so bleibt der durch die Perforationslinie begrenzte Stanzschnitt an der Lasche haften, die Entnahmeöffnung wird freigelegt. Die darunter liegende Öffnung des Innenbeutels kann entweder von vornherein freiliegend sein; sie kann jedoch auch in entsprechender Weise - wie soeben beschrieben - mit einer Lasche wieder verschließbar sein. Beispielsweise ist es insbesondere möglich, nur eine, den Innenbeutel wiederverschließbare Lasche unterhalb der durch die Perforation begrenzten Fläche vorzusehen. Es ist jedoch auch möglich, sowohl eine erste Lasche zum Wiederverschluß der Faltkartonober seite als auch eine zweite Lasche zum Wiederverschluß des Innenbeutels zu verwenden. Die Lasche sollte vorzugsweise aus flexiblem Material wie z.B. Polyäthylen-oder Aluminiumfolie bestehen.

Um eine sichere Befestigung der Lasche zu gewährleisten, sollte die Siegel- oder Klebenaht der Lasche mindestens 4 mm breit sein.

Insbesondere damit der gestanzte Materialstreifen beim Wiederverschließen die Entnahmeöffnung genau abdeckt, wird nach einer Weiterbildung der Erfindung vorgeschlagen, daß die Aufreiß-Perforationslinie bzw. Stanzlinie nicht in sich geschlossen, sondern zur Bildung der einstückig mit der Oberseite verbundenen Abdeckzunge offen ist und daß die die Abdeckzunge bildenden Stanzschenkel bis in die Siegel- bzw. Klebenaht zwischen der Lasche und Oberseite des Innenbeutels und/oder der Faltschachtel sich erstrecken oder Stanzschenkel jeweils zur Seite in einem Bogen auslaufen.

Vorzugsweise kann die Siegel- oder Klebenaht zwischen der Lasche und der Oberseite der Faltschachtel und/oder des Innenbeutels seitlich versetzte Bereiche aufweisen.

Die vorgeschriebene Ausführung der Stanzschenkel bzw. Siegel-oder Klebenaht ist im Prinzip aus der EP 0 221 168 B 1 allerdings bei wiederverschließbaren Verpackungen für feuchte Tücher aus Plastikfolie bekannt. Hinsichtlich der Vorteile dieser Ausbildung wird daher auf diese Druckschrift verwiesen.

Um bei der Entnahme feuchter Hygienetücher weiterhin auszuschließen, daß die unbeschichteten, gegebenenfalls entlang einer Perforation aufgetrennten Stirnseiten des Kartons als Grenzflächen der Kartonöffnung mit Flüssigkeit benetzt werden, was allmählich zu einer Durchweichung des Kartons führt, d.h. den Faltschachtelkarton auch nach Öffnen des Originalitätsverschlusses hinreichend vor Feuchtigkeit zu schützen, wird nach einer Weiterbildung der Erfindung die Faltschachteln mit den im Anspruch 3 aufgeführten Merkmalen vorgeschlagen.

Die Verklebung zwischen dem Etikett und dem Innenbeutel schützt nicht nur den Schachtelkarton vor Feuchtigkeit, sondern fixiert darüber hinaus die Verpackung auch bei Abnahme des Inhalts an der Kartonöffnung.

Nach einer Weiterbildung der Erfindung ist sowohl ein die Kartonöffnung in der Faltschachteloberseite abdeckendes Etikett mit einen laschenförmigen Teil als auch ein zweites darunter liegendes Etikett mit einer kleineren Lasche auf der Innenbeutelaußenseite vorgesehen, wobei das laschenförmige Teil und die kleinere Lasche miteinander verklebt sind. Hierdurch ist es möglich, daß beim Ziehen der Lasche gleichzeitig die kleinere Lasche auf der Innenbeutelaußenseite hochgezogen wird, was vorzugsweise die Handhabbarkeit der Faltschachtel erheblich vereinfacht.

Vorzugsweise deckt ein zweites Etikett an seiner Unterseite eine Perforation zur späteren Freigabe einer Entnahmeöffnung im Innenbeutel ab, wobei der von der Perforation unlösbar mit der Etikettunterseite verbunden ist. Diese Ausbildung gestattet einen sicheren Verschluß des Innenbeutels nach außen durch mehrere Maßnahmen: Zum einen ist zwar der Innenbeutel zur Bildung einer späteren Entnahmeöffnung perforiert, jedoch wird diese Perforation sicher und schützend durch das zweite Etikett abgedeckt. Darüber befindet sich das erste Etikett, indem durch Aufziehen einer Lasche die äußere Öffnung freigelegt werden kann. Wie bereits beschrieben, haften die Unterseite der ersten Lasche und das zweite Etikett durch Klebung aneinander.

Nach einer weiteren Ausgestaltung der Erfindung ist die Aufreiß-Perforationslinie bzw. Stanzlinie im Innenbeutel und/oder im Etikett nicht in sich geschlossen, sondern zur Bildung einer Zunge offen, wobei die die Zunge bildenden Stanzschenkel bis in die Siegel- bzw. Klebenaht zwischen der Lasche und der Oberseite des Innenbeutels und/oder des Etiketts sich erstrecken und/oder die Stanzschenkel jeweils zur Seite in einen Bogen auslaufen. Die Vorteile dieser Ausführungsform sind z.B. in der EP 0 221 168 B1 beschrieben, auf die hier ausdrücklich mit dem Hinweis verwiesen wird, daß die Stanzschenkel nach einer Neuerung der vorliegenden Anmeldung auch in einen nach innen zeigenden Bogen auslaufen können, womit das Etikett mit der Zunge schmaler herstellbar ist.

Ausführungsbeispiele der Erfindung sind in den Zeichnungen dargestellt.

Es zeigen:

Fig. 1 und 3 jeweils perspektivische Ansichten der möglichen Ausführungsformen einer erfindungsgemäßen Faltschachtel,

Fig. 2a, 2b und 4 jeweils Teilquerschnittsansichten der in Fig. 1 und 3 dargestellten Verpackungen,

Fig. 5 und 6 jeweils Draufsichten einer Ausführungsform der Perforationslinie bzw. Klebenaht,

Fig. 7 eine Querschnittsansicht einer alternativen Ausführungsform der Faltschachtel,

Fig. 8 eine Draufsicht nach Fig. 7,

Fig. 9 eine Teilschnittansicht längs der Linie A-A in Fig. 8,

Fig. 10 eine Draufsicht einer weiteren alternativen

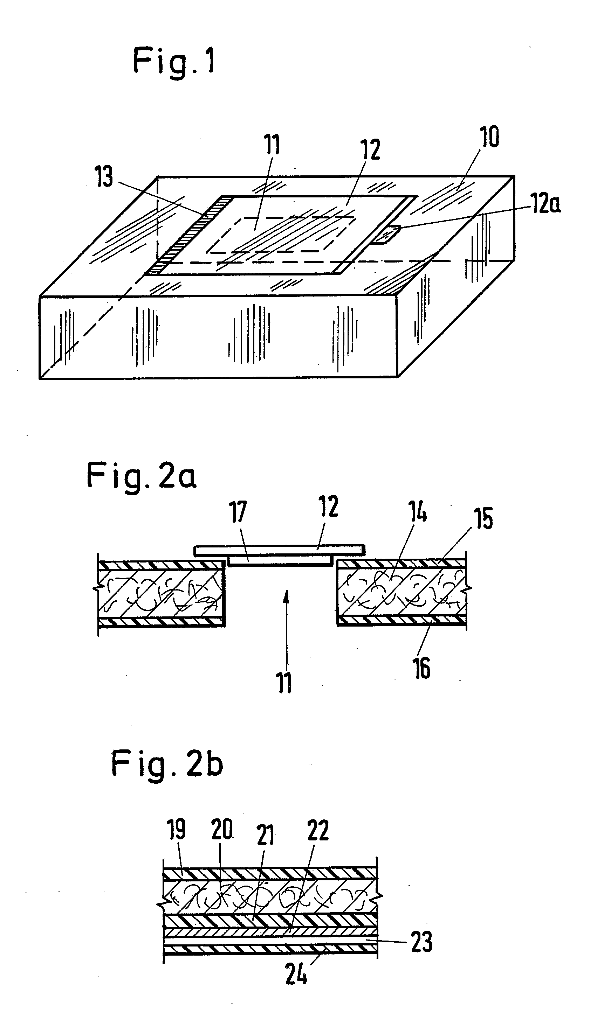

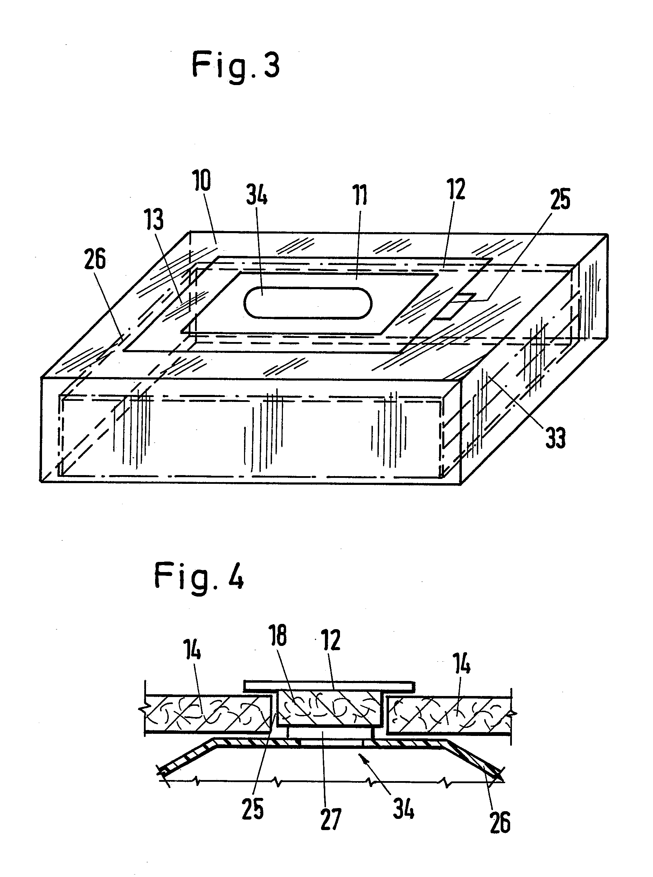

Die in Figur 1 dargestellte Faltschachtel 10 besitzt eine im Prinzip nach dem Stand der Technik bekannte Entnahmeöffnung 11 beispielsweise in Rechteck-oder länglich ovaler Form. Diese Entnahmeöffnung wird durch eine Lasche 12 mit einer vorderen nichtklebenden Griffzunge 12a abgedeckt, wobei die Lasche 12 an ihrem hinteren Ende mittels einer Siegelnaht 13 an der Faltschachteloberseite befestigt ist. Den Aufbau der Faltschachtel ersieht man aus Figur 2a: Die Faltschachtel besitzt eine Kartonschicht 14, die zur Außen- und Innenseite von jeweiligen Polyäthylen-Schichten 15 und 16 abgedeckt ist. Die äußeren Polyäthylen-Schicht dient vor allen Dingen dazu, der Lasche 12 eine nicht ablösbare Haftfläche für die klebende Innenseite der Lasche 12 zu bieten. Die Lascheninnenseite der Lasche 12 weist etwa in der Größe der Entnahmeöffnung 11 eine weitere Polyäthylen-Schicht 17 auf, welche als Dampfsperre dient und im übrigen verhindert, daß Hygienetücher an der Lascheninnenseite festkleben. Alternativ zu dieser Polyäthylen-Schicht 17 kann - wie in Figur 4 dargestellt - jedoch auch ein Stanzschnitt 18 aus Karton verwendet werden, der vor dem ersten Öffnen über eine Perforation mit dem Karton 14 verbunden ist.

Einen besonders dichten und stabilen Aufbau zeigt Figur 2b. Die dortige Schichtfolge besteht aus: Polyäthylen 19, Karton 20, Polyäthylen 21, Aluminium 22, Haftvermittler 23 und Polyäthylen 24.

Die in Figur 3 dargestellte Ausführungsform besitzt eine lediglich aus Karton bestehende Faltschachtel 10 mit einer einen Stanzschnitt 18 bildenden Perforationslinie 25. Im Inneren dieser Faltschachtel 10 ist ein Innenbeutel 26, vorzugsweise aus Polyester/Polyäthylen, mit einer Öffnung 34 derart angeordnet, daß die Öffnung 34 mit der Entnahmeöffnung 11 der Faltschachtel 10 zur Überlappung kommt. Der Innenbeutel ist im Bereich der Entnahmeöffnung mit der Faltschachtelinnenseite fest verbunden z.B. verklebt.

Im Prinzip ist es möglich, jeweils nur die Entnahmeöffnung 11 oder die Öffnung 34 durch eine Lasche 12 bzw. eine zweite Lasche 27 wiederverschließbar auszugestalten. Wie aus Figur 4 ersichtlich, ist es jedoch ebenso gut möglich, beide Öffnungen wiederverschließbar auszubilden. Hierbei kann die zweite Lasche 27 getrennt von der ersten Lasche 12 ablösbar sein, die zweite Lasche 27 kann jedoch an ihrer Außenseite auch mit dem Stanzschnitt 18 aus Karton fest verbunden sein, so daß Ablösen der Lasche 12 durch Hochziehen an der Griffzunge 12a zu einem gleichzeitigen Ablösen der Laschen 12 und 27 führt.

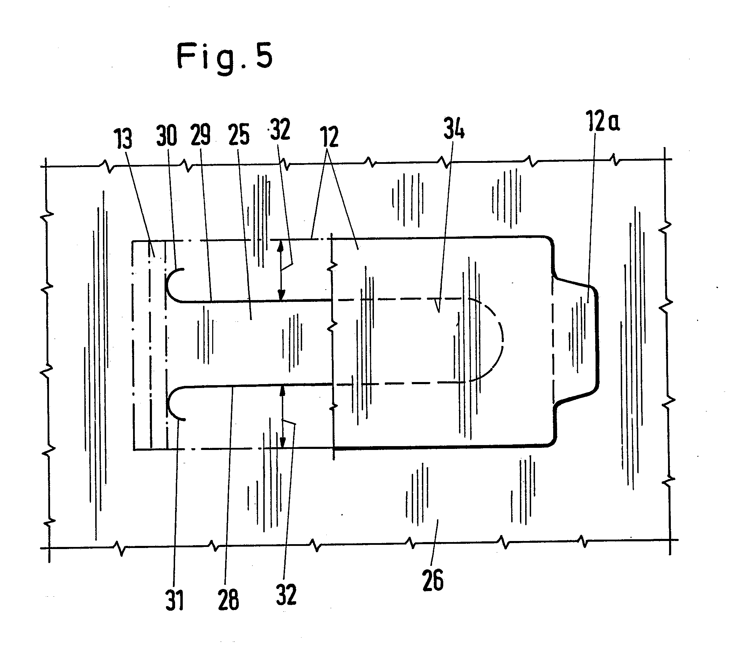

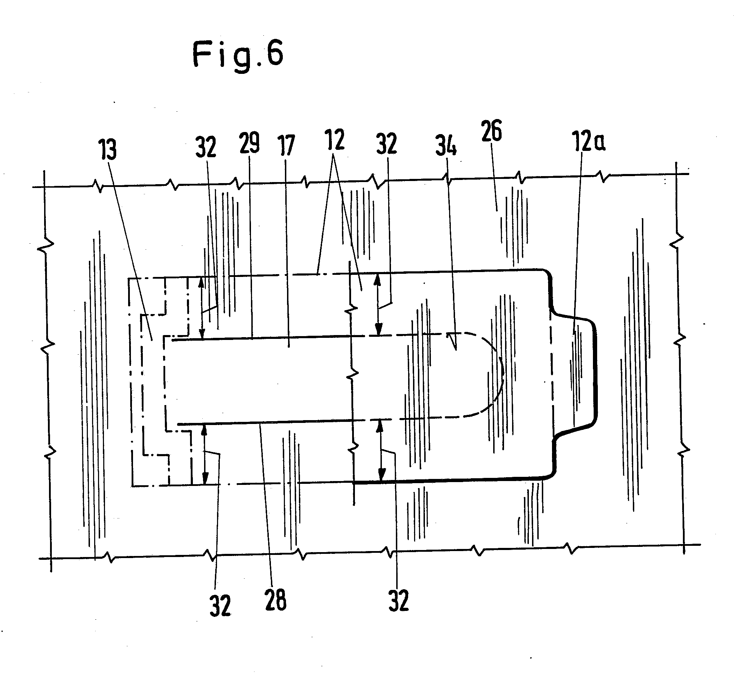

Figuren 5 und 6 zeigen eine Abdeckzunge 17, 25, die an ihrem der Griffzunge 12a gegenüberliegenden Ende nicht gestanzt, sondern einstückig mit dem Material der Oberseite - hier des Beutels 26 - verbunden ist. Die Enden der die Abdeckzunge 17 und 25 bildenden Stanzschenkel 28, 29 enden blind. Durch diese Einstückigkeit wird erreicht, daß beim Verschließen der Abdeckzunge 17, 25 die Abdeckzunge 17,25 genau über der Entnahmeöffnung 34 zu liegen kommt, also diese vollständig abdeckt. Da ferner die Schenkel 28, 29 der Stanzlinien an oder in der Siegelnaht 13 enden, erfolgt eine Versteifung oder Verstärkung, womit ein Weiterreissen beim Öffnen vermieden wird. Außerdem laufen die Stanzschenkel 28, 29 in zur Seite nach außen gerichtete Bögen 30, 31, womit ein Weiterreissen aufgrund einer Kerbwirkung vermieden werden kann.

Bei der Ausführungsform nach Figur 6 ist die Siegelnaht 13 gestuft, d.h. es sind zwei gegenüber dem mittleren Bereich vorversetzte seitliche Bereiche ausgebildet. Di bedingt, daß die Lasche 12 nur bis an die vorversetzten Siegelnahtbereiche abgezogen werden kann, damit die Enden der Stanzschenken 28, 29 vollständig vom Zug entlastet werden.

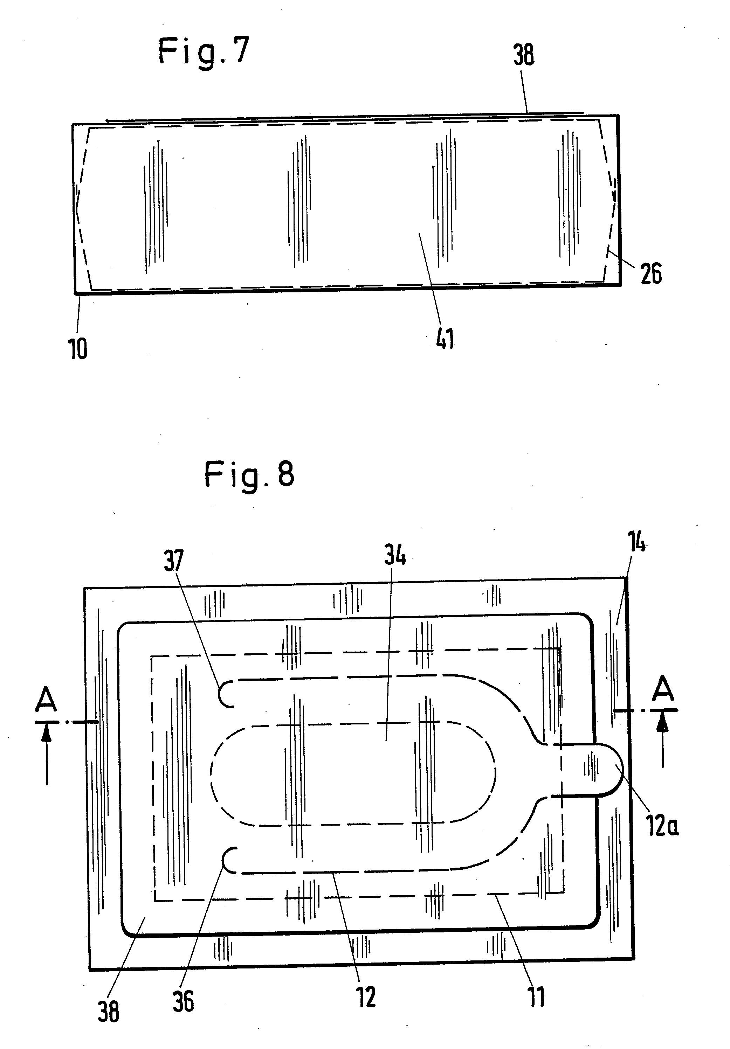

Weiterentwicklungen der beispielsweise in Fig. 3 dargestellten Faltschachtel mit einem Innenbeutel sind in den Figuren 7 bis 11 dargestellt.

Die Faltschachtel 10 besteht im wesentlichen aus Karton mit einem Kunststoff-Innenbeutel 26, der einen Hohlraum 41 umschließt. Die Faltschachteloberseite ist durch ein Etikett 38 abgedeckt, das (s. Fig. 8) entlang einer Perforationslinie, die in bogenförmigen Schenkeln 36 und 37 beidseitig endet, eine aufziehbare Lasche 12 mit einer Griffzunge 12a aufweist. Das Etikett 38 deckt eine Kartonöffnung 11 dergestalt ab, daß die Lasche 12 kleiner ist als die Öffnung 11. Unterhalb der Lasche 12 liegt die Entnahmeöffnung 34 im Innenbeutel 26.

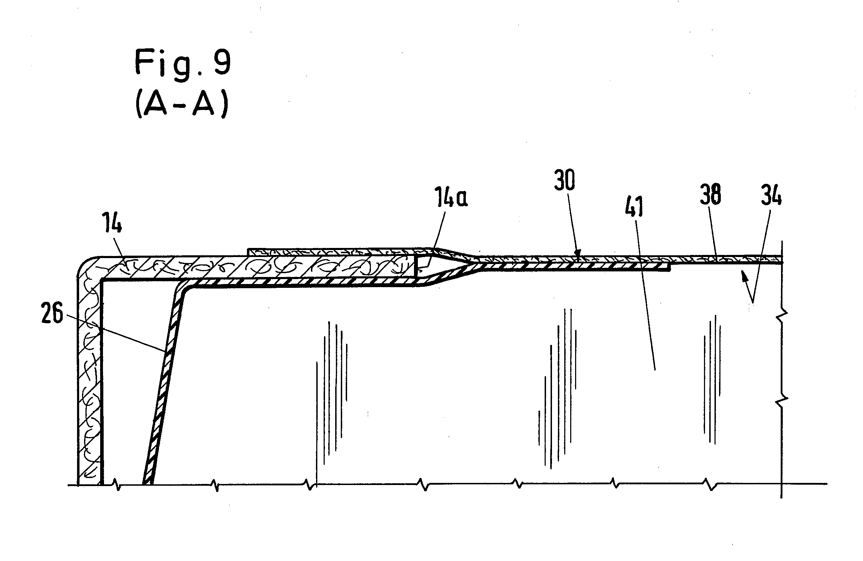

Wie anhand der Schnittansicht in Fig. 9 deutlich wird, wird die Kartonstirnseite nach außen durch eine Verklebung des Innenbeutels mit dem Etikett 38 im Bereich 39 ringsum abgeschirmt. Zieht man an der Griffzunge 12a die Lasche 12 auf, so wird die Öffnung 34 des Innenbeutels freigelegt, andererseits reicht diese jedoch nicht bis an die Stirnseite 14a des Kartons 14 heran, so daß bei der Entnahme von z.B. Hygienetüchern die betreffende Stirnseite nicht feucht werden kann. Beschichtet man die Kartonseite 14 im übrigen mit Kunststoff, so hat die erfindungsgemäße Faltschachtel den weiteren Vorteil, daß alle Teile außen abwaschbar sind, ohne daß Gefahr besteht, den Karton 14 durch Kontakt mit Flüssigkeit zu erweichen.

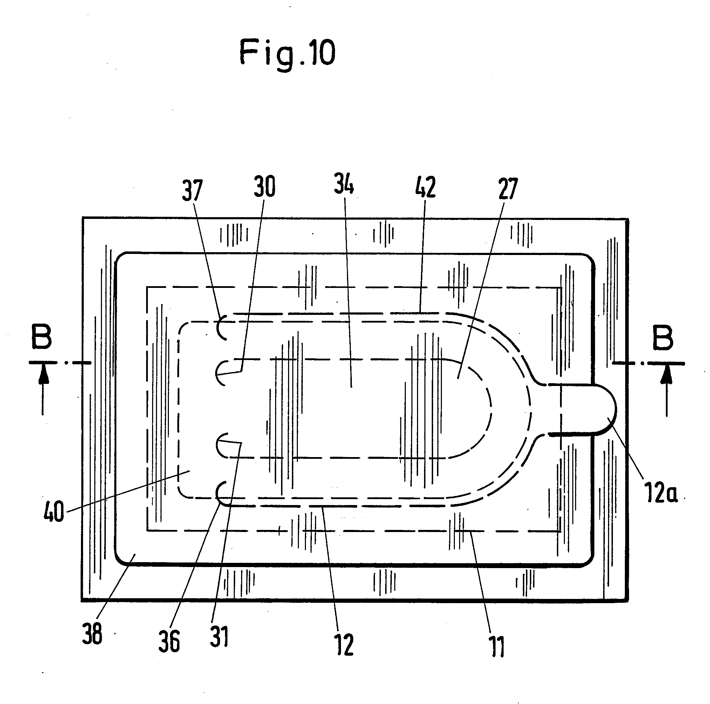

Die in Fig. 10 dargestellte Ausführungsform unterscheidet sich von der vorbeschriebenen dadurch, daß ein zweites Etikett 40 vorgesehen ist. Dieses Etikett 40 ist kleiner als die Öffnung 11 ausgebildet und liegt im Originalitätsverschluß zwischen der Innenbeutelfolie 26 und dem ersten Etikett 38. In analoger Weise wie bei dem ersten Etikett weist auch dieses zweite Etikett 40 eine Perforation auf, die dem Rand der späteren Entnahmeöffnung 34 entspricht und an den rückwärtigen Enden in nach innen weisenden Bogen 30 und 31 ausläuft. Diese Form der Bogenführung (Perforation) dient als Sicherung gegen unbeabsichtigtes Aufreißen bzw. Einkerbungen an der Zunge. Auch in der in Fig. 10 dargestellten Ausführungsform ist das Etikett 38 größer als die Öffnung 11 des Kartons. Im Bereich der Griffzunge 12a ist das Etikett eingeschnitten, wobei der Einschnitt in die Perforation 42 übergeht. Mit Abheben bzw. Aufziehen der Zunge 12 wird gleichzeitig die zweite Zunge 27, deren Oberseite an der Unterseite der Zunge 12 klebend befestigt ist, abgehoben, wobei die Entnahmeöffnung 34 freigelegt wird. Die bogenförmigen Schenkel 30, 31 und 36, 37 liegen in einer Linie, so daß sowohl die erste Zunge 12 wie auch die zweite Zunge 27 beide an derselben Stelle mit einer Weiterreißsicherung ausgestattet sind. Es versteht sich von selbst, daß die Griffzunge 12a auch an der Unterseite nichtklebend ausgestaltet ist.

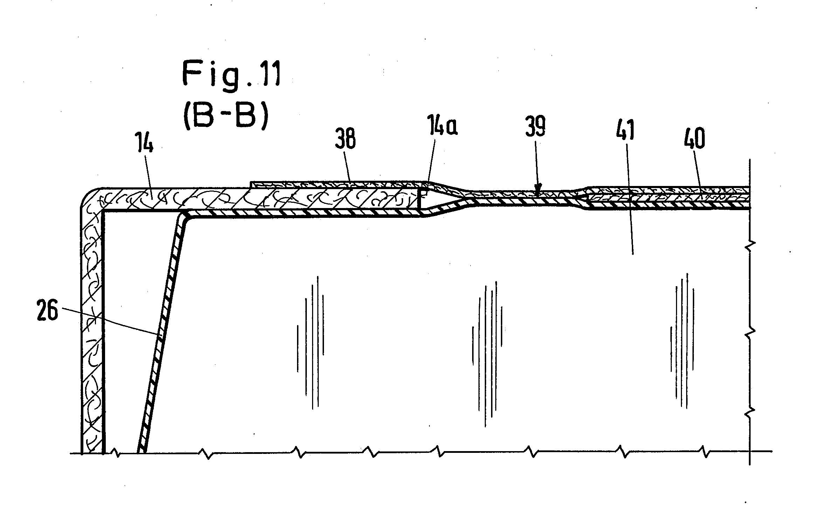

Wie in Fig. 11 dargestellt, verkleben im Bereich 39 auch nach dieser zweiten Ausführungsform das äußere Etikett 38 mit dem Innenbeutel 26 zum Schutze des Kartons 14, insbesondere an der Stirnseite 14a.

## Ansprüche

1. Faltschachtel aus Karton, die im wesentlichen quaderförmig ist und deren flache Oberseite eine vorbereitete, gegebenenfalls entlang einer geschlossenen Trennlinie (25)(Perforation) abtrennbare Flächen (18) zur Freigabe einer Entnahmeöffnung (11) aufweist, zur Aufnahme und Abgabe von darin übereinandergestapelten Hygienetüchern (33),
gekennzeichnet durch
einen dampf- und flüssigkeitsundurchlässigen, einen Hohlraum zur Aufnahme von Hygienetüchern (33) begrenzenden Innenkörper (16,26), der eine sich mit der Entnahmeöffnung (11) überlappende Öffnung (34) aufweist, und mindestens eine zungenförmige Lasche (12), die im Umriß größer als die Entnahmeöffnung (11) bzw.Öffnung (11) bzw. Öffnung (34) ist (sind) und diese überdeckt (überdecken), wobei das rückwärtige Ende der Lasche (12) durch eine permanente Siegel- oder Klebenaht (13) fest und die der Außenfläche der Oberseite und/oder dem Innenkörper zugewandte Innenseite außerhalb der Entnahmeöffnung (11) bzw. Öffnung (34) selbsthaftend oder selbstklebend, aber lösbar mit der Oberseite bzw. dem Innenkörper (26) verbunden ist (sind).

2. Faltschachtel nach Anspruch 1,
dadurch gekennzeichnet,
daß der Innenkörper (16) als Kunststoff- oder Aluminium-Beschichtung der Faltschachtelinnenseite ausgebildet ist.

3. Faltschachtel nach Anspruch 2,
dadurch gekennzeichnet,
daß die Faltschachtelinnenfläche (16) mit Polyäthylen (PE) beschichtet ist.

4. Faltschachtel nach Anspruch 2 oder 3,
dadurch gekennzeichnet,
daß die Faltschachtel (10) aus einem Al-Mehr-schichtverbund, vorzugsweise einer Schichtfolge PE (19), Karton (20), PE (21), Aluminium (22), Haftvermittler (23) und PE (24) von außen nach innen besteht.

5. Faltschachtel nach Anspruch 1,
dadurch gekennzeichnet,
daß ein Innenbeutel (26) zur Aufnahme der Hygienetücher (33) vorgesehen ist, dessen Außenmantel zumindest im Bereich um die Entnahmeöffnung (11) herum mit der Schachtelinnenfläche verbunden ist und der eine Öffnung (34) aufweist, die sich mit der vorzugsweise größeren Entnahmeöffnung (11) überlappt.

6. Faltschachtel nach Anspruch 5,
dadurch gekennzeichnet,
daß die Lasche (12) entweder auf der Faltschach-teloberaußenseite oder auf der Innenbeutelaußen-seite die Entnahmeöffnung (11) bzw. Öffnung (34) überdeckend befestigt ist.

7. Faltschachtel nach Anspruch 5,
dadurch gekennzeichnet,
daß sowohl eine erste Lasche (12) auf der Falt-schacteloberaußenseite als auch eine zweite Lasche (27) auf der Innenbeutelaußenseite vorgesehen sind.

8. Faltschachtel nach einem der Ansprüche 1 bis 7,
dadurch gekennzeichnet,
daß die Lasche (11,27) aus flexiblem Material, vorzugsweise PE- oder Al-Folie besteht.

9. Faltschachtel nach einem der Ansprüche 5 bis 8,
dadurch gekennzeichnet,
daß die Lasche (11,27) aus einem Klebeband besteht und an ihrer der jeweiligen Schachtel- bzw. Innenbeutelinnenseite zugewandten Fläche im Bereich der Entnahmeöffnung (11) bzw. Öffnung (27) eine nichtklebende Beschichtung (17) aufweist oder mit einem Stanzstück (18) bzw. der entlang der Perforation abtrennbaren Fläche fest verbunden ist.

10. Faltschachtel nach einem der Ansprüche 1 bis 9,
dadurch gekennzeichnet,
daß die rückwärtige Siegel- oder Klebenaht (13) der Lasche (12) mindestens 4 mm breit ist.

11. Faltschachtel nach einem der Ansprüche 1 bis 10,
dadurch gekennzeichnet,
daß die Aufreiß-Perforationslinie bzw. Stanzlinie nicht in sich geschlossen, sondern zur Bildung der einstückig mit der Oberseite verbundenen Abdeckzunge (17,25) offen ist und daß die die Abdeckzunge (17,25) bildenden Stanzschenkel (28,29) bis in die Siegel- bzw. Klebenaht (13) zwischen der Lasche (12) und Oberseite des Innenbeutel (26) und/oder der Faltschachtel (10) erstrecken und/oder daß die Stanzschenkel (28, 29) jeweils zur Seite in einen Bogen (30,31) auslaufen.

12. Faltschachtel nach Anspruch 11,
dadurch gekennzeichnet,
daß die Siegel- oder Klebenaht (13) zwischen der Lasche (12) und der Oberseite der Faltschachtel (10) und/oder des Innenbeutels (26) seitlich versetzte Bereiche aufweist.

13. Faltschachtel nach einem der Ansprüche 1 bis 12,
dadurch gekennzeichnet,
daß ein die Kartonöffnung (11) in der Faltschachteloberseite abdeckendes und mit der Faltschachteloberseite verklebtes Etikett (38) mit einem vorbereiteten, entlang einer Trennlinie (42) (Perforation) auftrennbaren laschenförmigen Teil (12) vorgesehen ist, das in der Oberfläche kleiner als die Kartonöffnung (11) ist und daß außerhalb dieses durch das laschenförmige Teil (12) bestimmten Bereiches, aber innerhalb der Kartonöffnung (11) die Innenbeutelaußenseite mit der Etikettunterseite verklebt ist.

14. Faltschachtel nach Anspruch 13,
dadurch gekennzeichnet,
daß sowohl ein die Kartonöffnung (11) in der Faltschachteloberseite abdeckendes Etikett (38) mit einem laschenförmigen Teil (12) als auch ein zweites Etikett (40) mit einer kleineren Lasche (27) auf der Innenbeutelaußenseite vorgesehen sind, wobei das laschenförmige Teil (12) und die kleinere Lasche (27) miteinander verklebt sind.

15. Faltschachtel nach Anspruch 13 oder 14,
dadurch gekennzeichnet,
daß ein zweites Etikett (40) an seiner Unterseite eine Perforation zur späteren Freigabe einer Entnahmeöffnung (34) im Innenbeutel (26) abdeckt, wobei der von dieser Perforation eingeschlossene Teil des Innenbeutels (26) unlösbar mit der Etikettunterseite verbunden ist.

16. Faltschachtel nach einem der Ansprüche 13 bis 15,
dadurch gekennzeichnet,
daß die Aufreiß-Perforationslinie bzw. Stanzlinie im Innenbeutel (26) und/oder im Etikett (38,40) nicht in sich geschlossen, sondern zur Bildung einer Zunge (12,27) offen ist und daß sich die die Zunge (12,27) bildenden Stanzschenkel bis in die Siegel- bzw. Klebenaht zwischen der Lasche (12,27) und der Oberseite des Innenbeutels (26) und/oder des Etiketts (38,40) erstrecken und/oder daß die Stanzschenkel jeweils zur Seite in einen Bogen (30,31;36,37) auslaufen.

# Fig.1

# Fig.2a

# Fig.2b

# Fig. 3

# Fig. 4

# Fig.5

# Fig.6

Fig.7

Fig.8

Fig. 9
(A-A)

EP 0 370 192 A1

# Fig.10

# Fig.11
## (B-B)

14    38  14a  39  41  40

26

EP 0 370 192 A1

# EUROPÄISCHER RECHERCHENBERICHT

**Europäisches Patentamt**

Nummer der Anmeldung

EP 89 11 7205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 251 103 (NAKAMURA) <br> * Seite 6, Zeile 5 - Seite 11, Zeile 22; Abbildingen 1-3 * | 1,5,6,8 ,9 | B 65 D 83/08 |
| Y | | 2-4,11, 12 | |
| A | | 7 | |
| | --- | | |
| Y | CH-A- 560 594 (BATTELLE MEMORIAL INSTITUTE) <br> * Spalte 2, Zeilen 1-32; Spalte 4, Zeilen 55-61; Spalte 7, Zeilen 5-19 * | 2,3,4 | |
| | --- | | |
| Y,D | WO-A-8 606 350 (VIRGUNIA VERPACKUNG) <br> * Ansprüche 1,3,4; Abbildungen * | 11,12 | |
| | ----- | | |

**RECHERCHIERTE SACHGEBIETE (Int. Cl.5)**

B 65 D
A 61 F
B 32 B

Der vorliegende Recherchenbericht wurde für alle Patentansprüche erstellt

| Recherchenort | Abschlußdatum der Recherche | Prüfer |
|---|---|---|
| DEN HAAG | 07-02-1990 | MARTINEZ NAVARRO A. |